# EUROPÄISCHE PATENTSCHRIFT

(11) **EP 0 689 084 B1**
(45) Veröffentlichungstag und Bekanntmachung des Hinweises auf die Patenterteilung: **04.06.2003**
(21) Anmeldenummer: 95108817.8
(22) Anmeldetag: 08.06.1995
(51) Int. Cl.: G02F 1/1335, G02B 5/30, G02F 1/1333

(54) **Optisches Bauelement aus Schichten vernetzter flüssigkristalliner Monomere und Verfahren zu seiner Herstellung**
Optical component comprising layers of crosslinked liquid crystal monomers and method of its production
Composant optique comprenant des couches en monomères liquides cristallins réticulés et procédé de sa production

(30) Priorität: 24.06.1994 CH 201694
(43) Veröffentlichungstag der Anmeldung: 27.12.1995
(73) Patentinhaber: Rolic AG, 6301 Zug (CH)
(72) Erfinder: Schadt, Martin, CH-4411 Seltisberg (CH); Schuster, Andreas, D-79110 Freiburg (DE); Seiberle, Hubert, D-79595 Rümmingen (DE)
(74) Vertreter: Liebetanz, Michael

(56) Entgegenhaltungen:
- EP-A- 0 336 321
- EP-A- 0 397 263
- EP-A- 0 525 478
- EP-A- 0 543 678
- EP-A- 0 569 809
- EP-A- 0 611 981
- RESEARCH DISCLOSURE, Nr. 337, EMSWORTH GB, Seiten 410-411, XP 000310119 ARTIKEL NR.33799 'Achromatic retardation layers based on anisotropic polymer networks'

## Beschreibung

Die Erfindung betrifft die Herstellung einer anisotropen Schicht vernetzter flüssigkristalliner Monomere (LCP) gem. Oberbegriff des Anspruchs 1, sowie optische Bauelemente gem. Oberbegriff des Anspruchs 4 und deren bevorzugte Verwendung.

Anisotrope transparente oder farbige Polymernetzwerkschichten mit einheitlicher oder punktweise vorgegebener räumlicher Orientierung der optischen Achse sind in vielen Bereichen der Displaytechnologie, der integrierten Optik etc. von grossem Interesse.

Seit einigen Jahren sind Substanzen bekannt, die diese Eigenschaften im Prinzip besitzen, nämlich gewisse vernetzbare flüssigkristalline Diacrylate und Diepoxide. Diese Substanzen lassen sich als Monomere, d.h. vor der Vernetzung, in Sandwich-Zellen, bestehend beispielsweise aus Glasplatten mit dazwischenliegender Monomerschicht, mit Hilfe konventioneller Orientierungsschichten auf den beiden Glasplattenoberflächen oder unter Einwirkung äusserer Felder, z.B. starker magnetischer oder elektrischer Felder, in der flüssigkristallinen Phase orientieren und in einem zweiten Schritt derart in der Zelle photovernetzen, dass die beidseitig der Monomerschicht wirksamen Wandkräfte, bzw. die angelegten Felder, während des Vernetzungsprozesses die vorgegebene Orientierung erhalten. Diese externen mechanischen, elektrischen oder magnetischen Kräfte verhindern die Flüssigkristallen inhärente thermodynamische Orientierungsrelaxation und wirken den desorientierenden Kräften konventioneller Vernetzungsprozesse entgegen. Ohne diese externen Kräfte findet in der Regel eine Desorientierung bzw. eine Umorientierung der Flüssigkristalle statt. Die Umorientierung von planar zu senkrecht an der der Substratoberfläche entgegengesetzten Trennschicht zur Luft wurde bei Einzelsubstraten z.B. durch Hikmet und de Witz in J. Appl. Phy. 70, 1265-1269 (1991) gezeigt.

Schichtstrukturen aus flüssigkristallinem Polymer sind z.B. aus EP-A-331 233 bekannt. Ihre Herstellung erfolgt, indem eine Monomerschicht in einer Zelle mit einer an den Zellenplatten angelegten Spannung orientiert und dann in einem Teilbereich durch eine Maske hindurch bestrahlt wird. Dabei wird nur im bestrahlten Bereich die Vernetzung ausgelöst. Anschliessend wird die Richtung des äusseren Feldes geändert, und die noch nicht vernetzten Monomerbereiche werden bezüglich der neuen Feldrichtung reorientiert. Daraufhin wird auch dieser Bereich beleuchtet und damit vernetzt. Es ist klar, dass dieses Verfahren nicht zu einer örtlich hochaufgelösten Orientierungsstruktur führen kann, da die radikalische Vernetzungsreaktion durch die Abschattung der Maske nicht scharf begrenzt wird. Ferner bedingt diese Methode immer die Verwendung von Sandwich-Zellen zur Orientierung der Schichtstruktur im elektrischen Feld.

Seit neuerer Zeit sind Verfahren bekannt, die es erlauben, Orientierungsschichten mit örtlich variablen Orientierungseigenschaften zu erzeugen. So ist z.B. in US-A-4,974,941 die Orientierung dichroitischer im Polymer eingelagerter Farbstoffmoleküle mit Hilfe photolithographischer Verfahren, ebenfalls in Sandwich-Zellen, beschrieben.

Ebenfalls seit kurzem bekannt ist die Orientierbarkeit und Photostrukturierbarkeit einer flüssigkristallinen Monomerschicht in einer Sandwich-Zelle, deren beide Oberflächen durch das in US-A-4.974.941 beschriebene Laserorientierungsverfahren photoorientiert sind. Auch dieses Verfahren bedingt die Orientierung der Monomerschicht in einer Zelle. Durch anschliessende konventionelle Photopolymerisation der flüssigkristallinen Monomerschicht in der Zelle wird die durch die Zelloberflächen eingeprägte Orientierung eingefroren. Um ein beschichtetes Einzelsubstrat zu erhalten, muss die Zelle nach der Polymerisation demontiert werden (P.J. Shannon, W.M. Gibbons, S.T. Sun, Nature 368, 532 (1994)).

Die Erzeugung von optisch stark anisotropen Schichten bestehend aus orientierten Flüssigkristallpolymeren in Zellen ist fermer bekannt aus Research Disclosure Nr 337, Mai 1992, Emsworth, GB, Seiten 410-411. Die Kombination der Merkmale des Oberbegriffs von Anspruch 1 und Anspruch 4 ist aus diesem Dokument bekannt. Dort wird die Herstellung derartiger Schichten durch Einfüllen der Flüssigkristallmonomere in die Zelle, Orientierung durch die beiden Zellwände via geriebene Polyimidoberflächen der Zelle und anschliessende konventionelle Photopolymerisation in der Zelle beschrieben. Ferner wird erwähnt, dass die eine der beiden Glasplatten nach dem Polymerisationsschritt entfernt werden kann um dadurch ein einzelnes, LC-Polymer beschichtetes Glassubstrat zu erhalten. Dieses orientierte Substrat kann wiederum mit einer Polyimidschicht mit neuer Orientierungsrichtung (durch Reiben) versehen werden. Nach erneuter Montage des derart präparierten Polymersubstrates in einer zweiten orientierten Sandwich-Zelle, Füllen dieser Zelle mit einer weiteren Monomerschicht und anschliessender konventioneller Photopolymerisation, addieren oder substrahieren sich die optischen Gangunterschiede der beiden verschieden orientierten LC-Polymerschichten in der Zelle. Da das Reiben der Polyimidschichten auf den Zelloberflächen ein makroskopischer Prozess ist, können mit diesem Verfahren keine Orientierungsmuster erzeugt werden, die Zellen sind über die gesamte Oberfläche gleichmässig orientiert. Ferner ist das Herstellen von Zellen mit präzisen Plattenabständen zwecks Realisierung von einheitlichen optischen Gangunterschieden (im zehn Nanometerbereich) äusserst aufwendig und kostspielig. Falls ausserdem optische Retarderschichten auf einem einzelnen Substrat benötigt werden, bedingt dies wie bei Shannon et al. auch gemäss dieser Publikation das Demontieren der Zellen. Dabei darf die Retarderschicht nicht verletzt werden. Dieser komplizierte Herstellprozess dürfte, insbesondere bei grösseren Substratflächen wie sie für hochinformative Computer und TV-LCDs benötigt werden, praktisch kaum realisierbar sein.

Schichtstrukturen aus einem Film vernetzter flüssigkristalliner Monomere in Kontakt mit einer Orientierungsschicht aus einem photoorientierbaren Polymernetzwerk (PPN) sind in der noch unveröffentlichten schweizerischen Patentanmeldung Nr. 488/93 (vgl. EP 0 611 981) beschrieben. Die Herstellung dieser Schichtstrukturen erfolgt dadurch, dass die flüssigkristallinen Monomere durch die Wechselwirkung mit der PPN-Schicht planar orientiert und die Orientierungen in einem anschliessenden Vernetzungsschritt fixiert werden. Vernetzte flüssigkristalline Monomere werden im folgenden Text auch als LCP (liquid crystal polymers) bezeichnet.

Es wurde nun überraschend gefunden, dass flüssigkristalline Monomerschichten auch auf einzelne Substratoberflächen aufgebracht und vernetzt werden können, die bereits eine LCP-Schicht enthalten. Dazu wird weder ein weiteres orientierendes Gegensubstrat einer Sandwich-Zelle benötigt, noch sind Magnetfelder oder elektrische Felder zur Orientierung notwendig. Dies etwa im Gegensatz zu EP-A-397263, wo Magnetfeldorientierung von dichroitischen Farbstoffen in einer einzelnen LC-Monomerschicht zwecks Herstellung eines polarisierenden Films bevorzugt angegeben wird und als einziges Verfahren tatsächlich exemplifiziert ist (feldfreie Orientierung wird zwar beansprucht, nicht aber nachgewiesen). Weiterhin wurde überraschend gefunden, dass die Orientierung dieser Monomerschichten auf dem Einzelsubstrat durch nachträgliche Polymerisation, bzw. Photovernetzung nicht beeinträchtigt oder gar zerstört wird. Damit wird es erstmals möglich, auf einzelnen LCP-orientierten Substratoberflächen auf einfache sequentielle Weise Festkörperfilme, bestehend aus mehreren orientierten flüssigkristallinen Polymerschichten herzustellen. In diese komplexen Hybridschichten können ferner weitere Schichten mit unterschiedlichen optischen und/oder elektrischen Funktionen integriert werden. Dies eröffnet erstmals die Möglichkeit, sowohl bekannte als auch neuartige optische Bauelemente, wie Polarisations-Interferenzfilter, optische Retarder, Polarisatoren, etc., auf Einzelsubstraten mittels LCPs zu realisieren, sowie diese Bauelemente in Hybridschichten zu kombinieren und zu integrieren. Ferner können weitere funktionelle Schichten wie Orientierungsschichten für Flüssigkristalle in die Hybridschichten integriert werden.

Der Erfindung liegt die Aufgabe zugrunde, neue Möglichkeiten mit Schichtstrukturen der vorstehend erwähnten Art für optische und elektrooptische Bauelemente und Einrichtungen bereitzustellen und zu erschliessen.

Die erfindungsgemässe Herstellung einer anisotropen Schicht vernetzter flüssigkristalliner Monomere (LCP) in Kontakt mit einer Orientierungsschicht besteht darin, auf einem einzelnen Substrat eine Orientierungsschicht und auf dieser eine Schicht aus einem nichtvernetzten flüssigkristallinen Monomer aufzubringen, anschliessend das Monomer zu vernetzen und dann auf die LCP-Schicht eine zweite Orientierungsschicht aufzubringen. Zur Herstellung komplexerer Schichtstrukturen können in weiteren Schritten weitere Orientierungs- und Flüssigkristallschichten aufgebracht und letztere vernetzt werden. Ausserdem können gegebenenfalls zwischen einzelnen LCP-Schichten und folgenden Orientierungsschichten optisch isotrope Entkopplungsschichten oder elektrisch leitende Schichten eingefügt, bzw. aufgebracht werden.

Die erfindungsgemässen Bauelemente zeichnen sich dadurch aus, dass mindestens eine der Orientierungsschichten eine Schicht aus einem photoorientierten Polymernetzwerk (PPN) ist.

Vorzugsweise kommen Monomermischungen in Frage, die bei Zimmertemperatur nematisch, cholesterisch, ferroelektrisch oder nichtlinear optisch (NLO) aktiv sind.

Die zweite und weitere LCP-Schichten können auch direkt, d.h. ohne PPN-Schichten dazwischen, auf die erste LCP-Schicht aufgebracht und anschliessend vernetzt werden. Dabei übernehmen die Monomere der zweiten und weiterer Schichten die Vorzugsorientierung der ersten bzw. der jeweils darunterliegenden LCP-Schichten.

Die PPN- und LCP-Schichten müssen selbstverständlich das Substrat nicht vollflächig, sondern können individuell unterschiedlich die Fläche ganz oder teilweise bedecken.

Verwendung finden solche mehrschichtigen Strukturen in optischen und elektrooptischen Vorrichtungen, sowie vor allem in der Herstellung von Flüssigkristallzellen, in denen die verschiedenen LCP-Schichten unterschiedliche optische und orientierende Funktionen erfüllen. Ferner finden sie Verwendung in integrierten optischen Vorrichtungen, z.B. in Streifenwellenleitern, Mach-Zender-Interferometern und frequenzverdoppelnden Wellenleiteranordnungen. Schliesslich können solche Schichtstrukturen zur Fälschungs- und Kopiersicherung verwendet werden.

Im folgenden werden anhand der beiliegenden Zeichnungen Ausführungsbeispiele der Erfindung beschrieben. Es zeigen in vereinfachter schematischer Darstellung
- Fig. 1: eine Schichtstruktur eines optischen Bauelements nach der Erfindung
- Fig. 2: eine Schichtstruktur eines optischen Bauelements mit einer zusätzlichen Schicht
- Fig. 3: eine alternativ aufgebaute Schichtstruktur mit einer zusätzlichen Entkopplungsschicht
- Fig. 4: eine weitere Schichtstruktur mit lokal unterschiedlicher Orientierung von Teilbereichen
- Fig. 5: eine weitere Schichtstruktur wie in Fig. 4 aber mit zusätzlicher Entkopplungsschicht
- Fig. 6: eine supertwisted nematische (STN) Flüssigkristallanzeigezelle mit einer Schichtstruktur gemäss Fig. 3
- Fig. 7: ein Diagramm der Richtungen des nematischen Direktors, der optischen Retarderschicht und der Polarisatoren in der Zelle nach Fig. 6
- Fig. 8: eine alternative Flüssigkristallzelle mit einer Schichtstruktur gemäss Fig. 2, jedoch mit einer zusätzlichen ITO-Schicht.

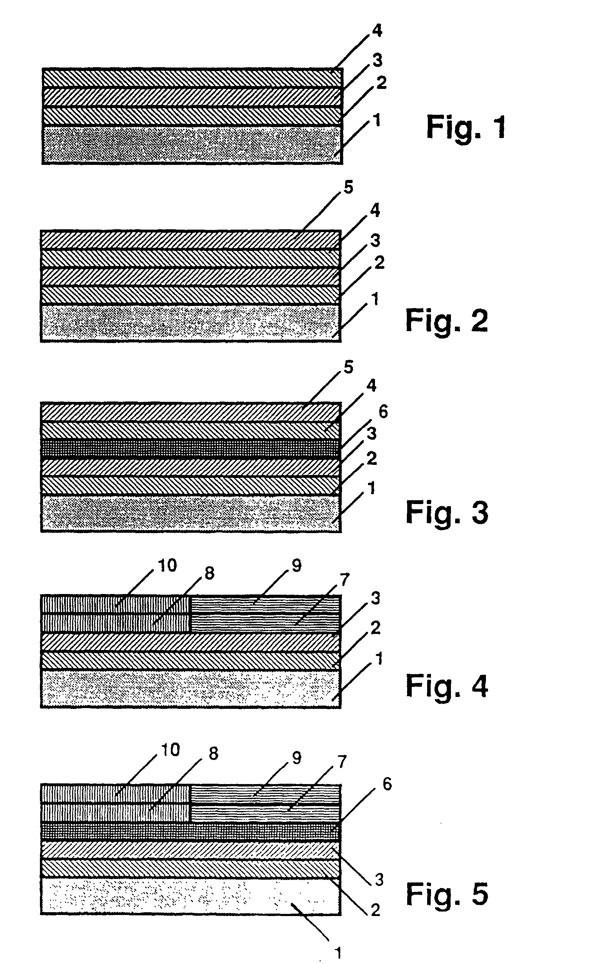

Der in Fig. 1 dargestellte schematische Schnitt durch eine Schichtstruktur nach einer Ausführungsform der Erfindung zeigt ein Substrat 1 aus einem transparenten oder reflektierenden Material, beispielsweise Glas, Polymer, Metall, Papier, etc. Auf diesem befindet sich eine Schicht 2 aus einem photoorientierten Polymernetzwerk, das entweder über seine ganze das Substrat bedeckende Fläche einheitlich oder lokal verschieden planar orientiert ist. Als Material hierfür sind beispielsweise Zimtsäurederivate geeignet, wie sie in den schweizerischen Patentanmeldungen Nr. 2244/91 und 2246/91 beschrieben sind.

Ihre Orientierung und gleichzeitige Vernetzung erfolgt durch selektive Bestrahlung mit linear polarisiertem UV-Licht.

Anstelle der PPN-Schicht kann die Schicht 2 auch eine herkömmliche Orientierungsschicht sein, z.B. eine in einer Richtung geriebene Polyimidschicht oder eine durch Schrägbedampfung mit SiOₓ erzielte Schicht mit Orientierüngswirkung. In diesem Fall besitzt die Orientierungsschicht in der Regel eine sich über die gesamte Substratoberfläche erstreckende einheitliche Orientierung. Für Anwendungen, bei denen eine einheitliche Orientierung über die Gesamtfläche gewünscht wird, kann diese mechanische Alternative kostengünstiger in der Herstellung sein, als die Verwendung einer PPN-Schicht.

Die PPN-Schicht 2 kann auch ihrerseits auf eine zuvor auf das Substrat 1 aufgebrachte, konventionell orientierte Schicht aufgebracht sein, z.B. auf eine schrägbedampfte SiOₓ-Schicht oder eine einheitlich geriebene Polymerschicht.

An die Schicht 2 grenzt eine anisotrope Schicht 3 aus orientiert vernetzten flüssigkristallinen Monomeren. Die Schicht 3 besitzt eine Molekülanordnung, deren Orientierung durch die Orientierung der darunterliegenden Schicht 2 vorgegeben ist, bzw. von dieser auf die Flüssigkristallschicht übertragen wurde. Durch Einwirkung von Licht geeigneter Wellenlänge wurde die LCP-Schicht 3 photovernetzt, wobei sie die durch die Schicht 2 vorgegebene Molekülorientierung beibehält. Durch die Photovernetzung wurde die Orientierung der LCP-Schicht 3 gegen extreme äussere Einflüsse, wie Licht oder hohe Temperaturen, stabil fixiert. Selbst etwaige optische oder thermische Instabilitäten die im Laufe der Zeit in der PPN-Schicht 2 auftreten können, beeinflussen die Orientierungseigenschaften der LCP-Schicht 3 nach deren Vernetzung nicht nachteilig.

An die LCP-Schicht 3 grenzt eine weitere Orientierungsschicht 4, die wiederum entweder eine PPN-Schicht oder eine konventionelle Orientierungsschicht ist, je nachdem, ob lokal unterschiedliche Orientierungsmuster oder eine einheitliche Orientierung für eine daran angrenzende zweite LCP-Schicht 5 gemäss Fig. 2 gewünscht wird. Die LCP-Schicht 5 ist in gleicher Weise hergestellt und hat dieselben Eigenschaften wie die Schicht 3. Die Orientierungsrichtungen der beiden LCP-Schichten sind aber in der Regel voneinander verschieden.

In Fig. 3 ist eine Ausführungsform eines Bauelements gezeigt, bei dem wie im soeben beschriebenen Fall zwei LCP-Schichten mit den jeweiligen Orientierungsschichten auf einem Substrat 1 angeordnet sind. Im Unterschied zu der Ausführungsform der Fig. 2 befindet sich aber zwischen der unteren LCP-Schicht 3 und der oberen Orientierungsschicht 4 eine optisch isotrope oder nur schwach anisotrope Entkopplungsschicht 6, durch die verhindert wird, dass die LCP-Schicht 3 ihren orientierenden Einfluss, den sie natürlich auch als Retarderschicht besitzen kann, auf die oberen Hybridschichten 4, 5 und damit auf einen über der Schicht 5 liegenden Flüssigkristall ausübt. Als Material für die Entkopplungsschicht 6 eignen sich beispielsweise Siliziumoxyde (SiOₓ) oder isotrope Polymere, wie etwa Polyvinylalkohol (PVA) oder Nylon.

Die in Fig. 4 gezeigte Schichtstruktur besteht ähnlich der von Fig. 2 aus vier auf einem Substrat 1 übereinanderliegenden Schichten, und zwar einer ersten PPN-Schicht 2, einer ersten LCP-Schicht 3, sowie je einer weiteren PPN- und LCP-Schicht. Im Unterschied zur Anordnung nach Fig. 2 weisen die beiden oberen Schichten jedoch lokal unterschiedliche Orientierungen auf. Die PPN-Schicht besitzt Bereiche 7 mit einer ersten und Bereiche 8 mit einer zweiten, von der ersten verschiedenen Orientierung. Da die Orientierung sich vor der Vernetzung der LCP-Schicht auf diese überträgt, besitzt die LCP-Schicht Bereiche 9 mit der ersten Orientierung und Bereiche 10 mit der zweiten Orientierung.

In ähnlicher Weise entspricht die in Fig. 5 gezeigte Schichtstruktur derjenigen von Fig. 3 also mit einer Entkopplungsschicht, mit dem Unterschied, dass die obere PPN-Schicht wiederum Bereiche 7 und 8 mit unterschiedlichen Orientierungen und die obere LCP-Schicht Bereiche 9 und 10 mit entsprechend unterschiedlichen Orientierungen aufweisen.

Wenn eine derartige in den Fig. 1-5 gezeigte Schichtstruktur mit zwei jeweils individuell orientierten LCP-Schichten zur Herstellung einer Flüssigkristallzelle verwendet wird, kann die Schicht 3 als Retarder und die Schicht 5 bzw. 9, 10 als Orientierungsschicht für den Flüssigkristall dienen. Für die Wirkung als Retarder wird der optische Gangunterschied der LCP-Schicht 3 in der Regel hoch gewählt, d.h. grösser als 100 nm.

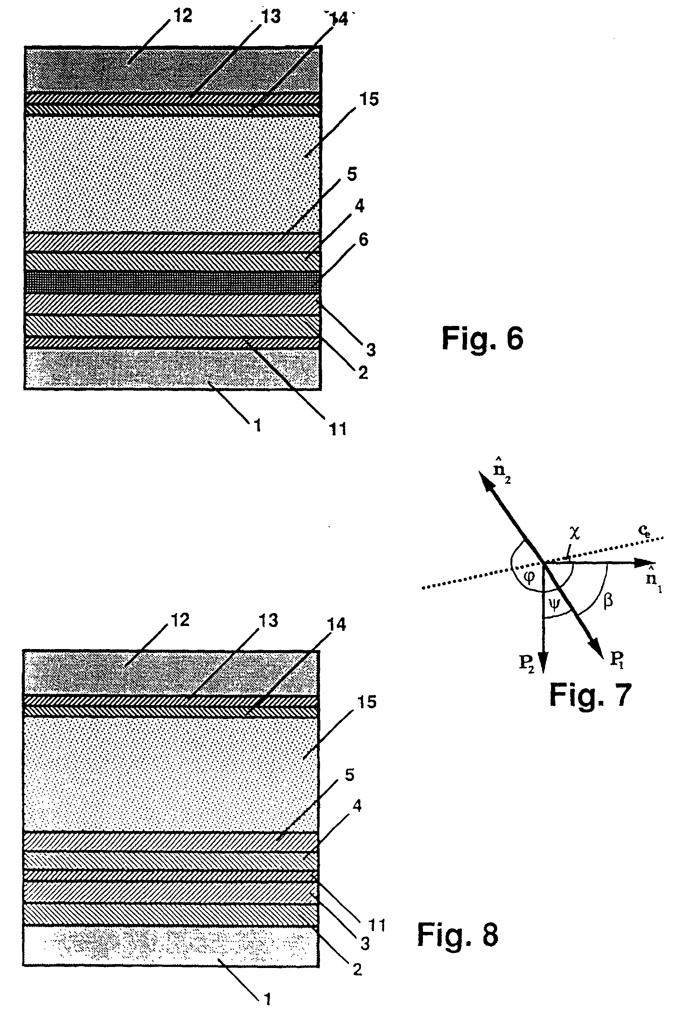

In Fig. 6 ist schematisch ein Schnitt durch eine mit einer solchen Schichtstruktur aufgebaute Flüssigkristallzelle gezeigt. Eine flüssigkristalline Schicht 15 liegt zwischen zwei Glasplatten 1 und 12, die auf ihren dem Flüssigkristall zugewandten Flächen mehrschichtig beschichtet sind. Die Platte 1 ist zunächst mit einer Elektrodenschicht 11, vorzugsweise aus Indium-Zinn-Oxyd (ITO) zum Anlegen einer Spannung versehen. Zur Vermeidung von Spannungsabfallen über den Polymerschichten kann die ITO-Schicht 11 auch über der Schicht 3 bzw. 6 aufgebracht sein. Ansonsten entspricht die Konfiguration der Schichtstruktur wie in Fig. 3 dargestellt, d.h. zwei PPN-LCP-Kombinationen 2, 3 und 4, 5 mit einer alternativ dazwischen liegenden Entkopplungsschicht 6. Die LCP-Schicht 3 hat die Funktion eines Retarders, die LCP-Schicht 5 dient der Orientierung des Flüssigkristalls 15. Das Substrat kann zusätzlich mit einer reflektiven Schicht versehen sein.

Die andere Glasplatte 12 ist ebenfalls mit einer ITO-Schicht 13 als Elektrodenschicht und darüber einer Orientierungsschicht 14, z.B. aus unidirektional geriebenem PVA, beschichtet.

Um eine STN-Zelle mit einem Drehwinkel ϕ = 240° zu erhalten, weisen die Orientierungsrichtungen der PVA-Schicht 14 und der oberen LCP-Schicht 5 einen Winkel von 60° zueinander auf. Bei geeigneter chiraler Dotierung des Flüssigkristalls ergibt sich damit eine Verdrillung des Flüssigkristalls 15 von 240°. Fig. 7 zeigt die Anordnung der Polarisatoren P₁ und P₂, die Richtung der langsamen optischen Achse cₑ des optischen Retarders 3, sowie die Wandorientierungsrichtungen n̂₁ und n̂₂ der Flüssigkristallschicht 15 an den beiden Orientierungsschichten 5 und 14. n̂₁ und P₁ sind auf der Retarderseite.

Diese Zelle ist ohne angelegte Spannung lichtundurchlässig und wird durch Ansteuern mit einer geeigneten Spannung transparent. Die bei STN-Zellen üblichen Interferenzfarben treten wegen des integrierten Retarders 3 nicht auf, d.h. die Zelle ist in Durchsicht weiss.

Die Retarderschicht 3 kann auch aus einem mit chiralen Dotierstoffen gemischten Flüssigkristall bestehen. Ueber die Konzentration des Dotierstoffes lassen sich Verdrillungswinkel zwischen 0° und 360° einstellen. Die Verdrillung kann rechts- oder linksdrehend sein.

Solche verdrillten Retarder eignen sich besonders gut zur Farbkompensation von STN-Anzeigezellen. Vorzugsweise werden für diese Anwendung Retarder-Schichten mit grossen optischen Gangunterschieden von Δn·d ≈ 900 nm verwendet. Bei Verwendung eines verdrillten optischen Retarders in der STN-Zelle von Fig. 6 müssen folgende Bedingungen erfüllt sein:
- Der Drehsinn des optischen Retarders ist umgekehrt zum Drehsinn der Flüssigkristallschicht 15, wobei der Drehwinkel (ϕ) des optischen Retarders gleich dem der Flüssigkristallschicht ist.
- Die langsame optische Achse des optischen Retarders steht auf der dem Flüssigkristall zugewandten Seite senkrecht zur Orientierungsrichtung n̂₁ des Flüssigkristalls 15.
- Der optische Gangunterschied des optischen Retarders entspricht dem optischen Gangunterschied der Flüssigkristallschicht 15.

Alternativ kann ein schraubenförmig verdrillter Retarder auch verwirklicht werden, indem ein Mehrschichtensystem aus abwechselnd aufeinanderfolgenden Orientierungsschichten und LCP-Schichten, ggf. unter Zwischenschalten von Entkopplungsschichten, so aufgebaut wird, dass die planaren optischen Achsen der Schichten azimutal variieren und so eine Helixstruktur entsteht.

Durch höhere Konzentrationen an chiralen Dotierstoffen in verdrillten Retarderschichten erhält man Schichten mit hoher Verdrillung, die als cholesterische optische Filter wirken. Wegen der thermischen Stabilität der Schichten lassen sich solche Filter bei Temperaturen von weit über 100°C einsetzen. Die Wellenlänge der selektiven Reflexion solcher cholesterischer Filter kann durch Variation der chiralen Dotierstoffe variiert werden. Durch Uebereinanderlagern von mindestens zwei cholesterischen Schichten mit jeweils unterschiedlicher selektiver Reflexion lässt sich die Bandbreite der selektiven Reflexion der Filterkombination variieren.

Ebenso wie chirale Zusätze können auch dichroitische Farbstoffe als Dotierungsstoffe verwendet werden. Durch Hinzufügung von dichroitischen Farbstoffen, die in der LCP-Schicht durch deren Flüssigkristallmoleküle orientiert sind, erhält man Retarder- oder Orientierungsschichten mit integriertem Linearpolarisator, bzw. absorptive optische Filter.

Weitere Einzelheiten werden aus den nachfolgenden Beispielen ersichtlich.

### Beispiel 1

### Herstellung einer PPN-Schicht

Als PPN-Material kommen z.B. Zimtsäurederivate in Frage. Für die Beispiele wurde ein PPN-Material mit hohem Glaspunkt (Tg = 133°C) ausgewählt:

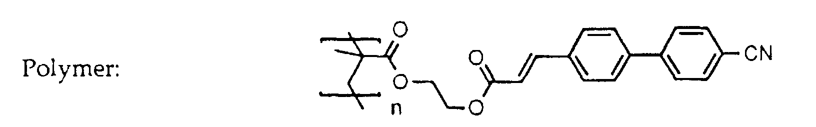

Eine Glasplatte wurde durch Spincoating mit einer 5-prozentigen Lösung des PPN-Materials in NMP für eine Minute bei 2000 UpM beschichtet. Die Schicht wurde dann 2 Stunden bei 130°C auf einer Wärmebank und weitere 4 Stunden bei 130°C im Vakuum getrocknet. Die Schicht wurde dann mit dem linear polarisierten Licht einer 200 W Hg Höchstdrucklampe 5 Minuten bei Raumtemperatur belichtet. Danach liess sich die Schicht als Orientierungsschicht für Flüssigkristalle einsetzen. Die thermische Stabilität der Orientierungsfähigkeit ist allerdings für viele Anwendungen zu klein. So ging die Orientierungsfähigkeit z.B. bei 120°C nach 15 Minuten verloren.

### Beispiel 2

### Mischung vernetzbarer LC-Monomere für die LCP-Schichten

Als vernetzbare LC-Monomere wurden in den Beispielen folgende Diacrylatkomponenten verwendet:

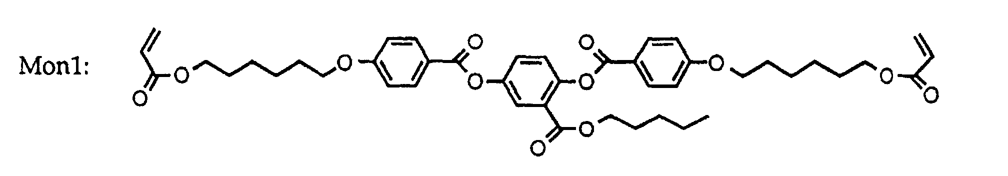

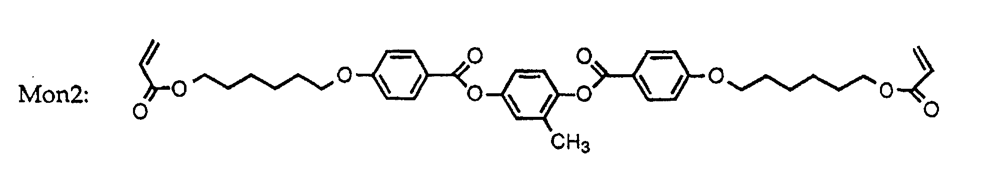

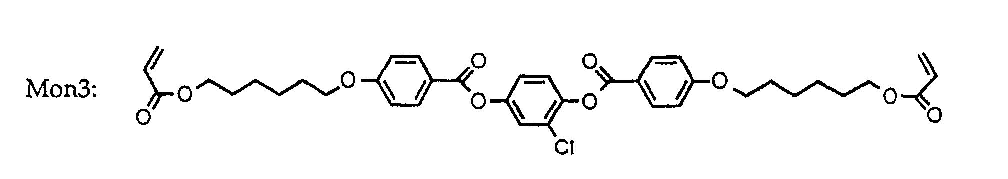

Mit diesen Komponenten wurde eine unterkühlbare, nematische Mischung M_{LCP} mit besonders tiefem Schmelzpunkt (Tm ≈ 35°C) entwickelt, die es erlaubt, die Präparation der LCP-Schicht bei Raumtemperatur auszuführen.

Die Diacrylat-Monomere sind in der folgenden Zusammensetzung in der Mischung vorhanden:

| | |
|---|---|
| Mon1 | 80% |
| Mon2 | 15% |
| Mon3 | 5% |

Der Mischung wurden zusätzlich noch 2% des Photoinitiators IRGACURE 369 von Ciba-Geigy zugefügt.

Diese Mischung M_{LCP} wurde nun in Anisol gelöst und auf eine Orientierungsschicht aufgebracht. Ueber die Konzentration von M_{LCP} in Anisol liess sich die LCP-Schichtdicke über einen weiten Bereich einstellen. Zur photoinduzierten Vernetzung der LC-Monomere wurden die Schichten nach ihrer Orientierung mit isotropem Licht einer 150 W Xenonlampe für ca. 30 Minuten bestrahlt und damit die Orientierung fixiert.

### Beispiel 3

### Kombination von Retarder- und Orientierungsschicht

Eine PPN-beschichtete Glasplatte wurde 5 Minuten mit polarisiertem UV-Licht bestrahlt. Auf die belichtete Schicht wurde eine 40-prozentige Lösung aus M_{LCP} in Anisol aufgeschleudert. Spinparameter: 2 Minuten bei 2000 UpM. Die entstandene, vernetzbare LCP-Schicht orientierte sich entsprechend der Polarisationsrichtung des UV-Lichtes. Nach der Vernetzung der LCP-Schicht hatte diese eine Dicke von 2.2 µm.

Ordnet man die beschichtete Glasplatte unter gekreuzten Polarisatoren so an, dass die Polarisatoren parallel bzw. senkrecht zur Polarisationsrichtung bei der Belichtung der PPN-Schicht stehen, so ist die Platte dunkel. Dreht man die Platte jedoch um 45° in der Plattenebene, so wird die Platte hell; d.h. sie ist doppelbrechend. Die optische Verzögerung beträgt etwa 300 nm.

Auf diese Hybridschicht mit einer optischen Verzögerung von 300 nm wurde als isotrope Entkopplungsschicht eine 50 nm dicke SiOₓ-Schicht aufgesputtert. Danach wurde auf diese, wie in Beispiel 1 beschrieben, eine PPN-Schicht aufgebaut. Die PPN-Schicht wurde in zwei Gebiete unterteilt, die mit unterschiedlichen Polarisationsrichtungen belichtet wurden, wobei die Polarisationsrichtung des Lichtes in der einen Hälfte parallel in der anderen senkrecht zur optischen Achse der darunterliegenden Retarderschicht war. Die jeweils andere Hälfte war während der Belichtung abgedeckt. Dies ergibt zwei Gebiete mit planaren, zueinander senkrecht liegenden Orientierungsrichtungen.

Es wurde eine 5-prozentige Lösung von M_{LCP} in Anisol hergestellt. Diese Lösung wurde auf die lokal unterschiedlich belichtete PPN-Schicht aufgeschleudert. Spinparameter: 2 Minuten bei 2000 UpM. Um die Orientierung der LC-Monomere zu optimieren, wurde nun das beschichtete Substrat bis knapp oberhalb des Klärpunktes (T_{c} = 67°C) erwärmt. Anschliessend wurde die Schicht mit 0.1°C/min. bis einige Grad unter den Klärpunkt abgekühlt und anschliessend photochemisch vernetzt.

Baut man mit diesem Hybridsubstrat und einem zweiten, geriebenen, PVA-beschichteten Substrat eine LC-Zelle und füllt diese mit einem Flüssigkristall, so erhält man in der einen Hälfte der Zelle eine Drehzellen(TN)-Konfiguration, in der anderen Hälfte eine homogen planare Anordnung der LC-Moleküle. Das Hybridsubstrat wirkt dabei einerseits als optischer Retarder, andererseits als Orientierungsschicht für den Flüssigkristall. Die optische Achse des Retarders kann dabei verschieden sein von der Richtung, in die die LC-Moleküle orientiert werden.

Die Multilayerschicht ist aufgrund der beiden vernetzten LCP-Schichten thermisch und optisch stabil.

Anstelle der SiOₓ-Schicht wurden auch isotrope Entkopplungsschichten aus Nylon hergestellt. Dazu wurde 0,1% Nylon in Trifluorethanol gelöst und in einem Spin-Coating-Verfahren auf die erste LCP-Schicht aufgebracht.

### Beispiel 4

### In situ kompensierte STN-Zelle mit uniaxialem Retarder

Auf eine ITO-beschichtete Glasplatte wurde eine PPN-Schicht aufgebracht und mit linear polarisiertem Licht bestrahlt. Anschliessend wurde eine 53-prozentige Lösung von M_{LCP} in Anisol aufgeschleudert und vernetzt (Spinparameter: 2 Minuten bei 2000 UpM). Die optische Verzögerung dieser Retarderschicht betrug 530 nm. Wie in Beispiel 3 wurde eine zweite PPN-Schicht aufgebracht, die durch eine isotrope SiO₂-Schicht vom Retarder entkoppelt ist. Die Richtung des Polarisators für die Belichtung der zweiten PPN-Schicht wurde um 75° gegenüber der Polarisationsrichtung der PPN1-Belichtung gedreht. Nach der Belichtung der PPN2-Schicht wurde darauf wie in Beispiel 3 eine dünne LCP-Schicht aufgebracht.
Mit diesem Substrat, sowie einem zweiten, geriebenen PVA-ITO-Glassubstrat wurde eine LC-Zelle mit einem Plattenabstand von d = 5 µm gebaut. Die zweite Platte wurde dabei so angeordnet, dass zwischen deren Reibrichtung und der Orientierungsrichtung der Hybridschicht ein Winkel von 240° bestand. Die Durchlassrichtungen der beiden erforderlichen Polarisatoren wurden entsprechend Fig. 7 eingestellt. Eine Flüssigkristallmischung wurde zunächst mit einem chiralen Dotierstoff so dotiert, dass sich ein Verhältnis von d/p = 0.51 (p=pitch) ergab. Diese Mischung wurde in die LC-Zelle gefüllt.
Solange keine Spannung an der Zelle anliegt, erscheint diese dunkel. Legt man dagegen eine ausreichende Spannung an, so schaltet die Zelle von schwarz nach weiss. Die bei STN-Zellen üblichen Interferenzfarben sind somit durch die Retarderschicht kompensiert; sodass sich eine extern aufzubringende Kompensationsfolie erübrigt.

### Beispiel 5

### Hybridschicht als verdrillter Retarder

Die Mischung M_{LCP} wurde mit 0.16% eines linksdrehenden chiralen Dotierstoffes mit hohem Drehvermögen dotiert [Helical Twisting Power (HTP)=0.26µm⁻¹]. Die dotierte Mischung wurde dann zu 40 Prozent in Anisol gelöst und auf eine belichtete PPN-Schicht aufgeschleudert (2 min. bei 2000 UpM). Nach der Vernetzung betrug die Dicke der LCP-Schicht ca. 2.2 µm. Betrachtet man das beschichtete Plättchen unter gekreuzten Polarisatoren, wobei die Durchlassrichtung auf der Substratseite parallel zur Polarisationsrichtung der PPN-Belichtung ist, so erscheint die Schicht nicht dunkel, wie dies bei linearen Retardern der Fall wäre. Die Schicht wird jedoch maximal dunkel, wenn man den Analysator um 30° dreht. Die Polarisationsebene des linear polarisierten Lichts wird also beim Durchgang durch den Retarder entsprechend dem in der LCP-Schicht vorhandenen Twist um 30° gedreht.
Ueber die Konzentration des chiralen Dotierstoffes lassen sich Twistwinkel zwischen 0° und 360° einstellen. Statt eines linksdrehenden lässt sich auch ein rechtsdrehender chiraler Dotierstoff einsetzen. Interessant sind solche verdrillten Retarder z.B. für die Farbkompensation von STN-Displays.

### Beispiel 6

### In situ kompensierte STN-Zelle mit verdrilltem Retarder

Statt des linearen Retarders lässt sich als erste PPN-LCP-Schichtkombination auch ein verdrillter Retarder realisieren, womit sich der Kontrast noch weiter steigern lässt. Für die erste LCP-Schicht wurde die Mischung M_{LCP} deshalb mit einem rechtsdrehenden chiralen Dotierstoff dotiert. Die Spinparameter wurden so gewählt, dass die optische Verzögerung der LCP-Schicht gleich war wie die des Flüssigkristalls 15 in Fig. 6. Ueber die Konzentration des Dotierstoffes liess sich dann der Pitch der LCP-Schicht so einstellen, dass der Drehwinkel des Retarders gleich gross war wie der Drehwinkel des Flüssigkristalls. Die über dem verdrillten Retarder liegende Orientierungsschicht wurde so belichtet, dass deren Orientierungsrichtung senkrecht zur langsamen Achse des Retarders auf der der Orientierungsschicht zugewandten Seite angeordnet war. Analog zum Beispiel 4 wurde mit diesem Substrat eine STN-Zelle gebaut und mit einem linksdrehenden Flüssigkristall gefüllt.

### Beispiel 7

### Hybridschichten mit lokal unterschiedlichen Farben

Eine 50-prozentige Lösung von M_{LCP} in Anisol wurde bei Raumtemperatur auf eine mit linear polarisiertem Licht bestrahlte PPN-Schicht aufgeschleudert und vernetzt. Man erhielt einen optischen Retarder mit einer Verzögerung von 470 nm. Unter gekreuzten Polarisatoren war die Platte jetzt orangefarben. Wie in Beispiel 3 wurde nun als isotrope Entkopplungsschicht eine 50 nm dicke SiOₓ-Schicht aufgesputtert und darauf eine zweite PPN-Schicht aufgebracht. Die PPN2-Schicht wurde nun in drei Gebiete unterteilt, die mit unterschiedlichen Polarisationsrichtungen belichtet wurden. Die Polarisationsrichtungen wurden im Gebiet 1 parallel, im Gebiet 2 senkrecht und im Gebiet 3 45° zur Polarisationsrichtung der PPN1-Belichtung gewählt. Während der Belichtung der einzelnen Gebiete waren die anderen abgedeckt.
Auf die so belichtete PPN2-Schicht wurde eine 30-prozentige Lösung von M_{LCP} in Anisol aufgeschleudert und vernetzt. Dies ergab eine LCP-Schicht mit einer optischen Verzögerung von Δnd = 140 nm.
Ordnete man die Hybridschicht unter gekreuzten Polarisatoren so an, dass die Polarisationsrichtung der PPN1-Belichtung unter 45° zu den Polarisatoren lag, so erkannte man drei Farben.

| Gebiet | Δnd [nm] | Farbe |
|---|---|---|
| 1 | 610 | blau |
| 2 | 330 | gelb |
| 3 | 470 | orange |

Die optischen Verzögerungen der beiden LCP-Schichten haben sich im Gebiet 1 addiert, im Gebiet 2 dagegen subtrahiert.
Durch Aufbringen weiterer PPN-LCP-Kombination lassen sich in analoger Weise aus jeder dieser drei Farben weitere Farben erzeugen. Die Belichtung der einzelnen Schichten kann auch durch Variation der Polarisationsrichtungen mit Winkeln zwischen 0° und 90° gegenüber der ersten Belichtung erfolgen. Dadurch lassen sich auch Lyot/Oehman- oder 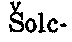 Interferenzfilter verwirklichen, deren Durchlassbereich sich über die Anzahl Schichten, deren Dicke und die Richtung ihrer optischen Achsen einstellen lässt. Durch die Strukturierung lässt sich der Durchlassbereich pixelweise verschieden einstellen.

### Beispiel 8

### Cholesterische LCP-Schicht für optische Filter/Polarisatoren (Zirkularpolarisatoren)

Die Mischung M_{LCP} wurde mit 12% des chiralen linksdrehenden Dotierstoffes aus Beispiel 5 dotiert. Die so erzeugte cholesterische Mischung hat einen pitch von ca. 360 nm. Die dotierte Mischung wurde dann zu 40% in Anisol gelöst, auf eine linear polarisiert belichtete PPN-Schicht aufgeschleudert und vernetzt. Die entstandene Schicht wirkt als cholesterisches Filter mit einer selektiven Reflexionswellenlänge von λ₀=580 nm. Die Breite der Reflexionsbande beträgt 70 nm.

### Beispiel 9

### Dichroitische LCP-Schichten als Linear Polarisatoren

Der Mischung M_{LCP} wurden 2% des dichroitischen Farbstoffes mit folgender Struktur zugefügt: 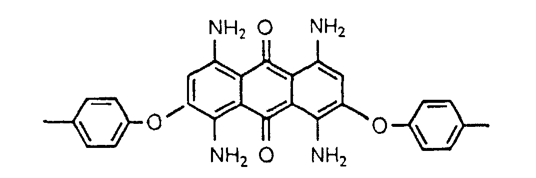 Diese Mischung wurde zu 30% in Anisol gelöst und auf eine mit linear polarisiertem Licht bestrahlte PPN-Schicht aufgeschleudert und vernetzt. Hielt man einen Polarisator mit der Durchlassrichtung parallel bzw. senkrecht zur Polarisationsrichtung der PPN-Belichtung, so wurde im einen Fall das weisse Licht durchgelassen, senkrecht dazu wurde die Schicht jedoch entsprechend dem Absorptionsspektrum des Farbstoffes farbig. Das dichroitische Verhältnis betrug 8:1. Verwendet man statt dessen eine schwarze Mischung aus dichroitischen Farbstoffmolekülen, so wirkt die Hybridschicht als breitbandiger Polarisator. Durch die gebietsweise Bestrahlung der PPN-Schicht mit verschiedenen Polarisationsrichtungen lassen sich linear polarisierende Schichten mit azimuthal variierenden Polarisationsrichtungen herstellen. Diese können z.B. im Zusammenhang mit den strukturierten Retardern und Orientierungsschichten der obigen Beispiele in LC-Displays zum Einsatz kommen.

## Patentansprüche

1. Verfahren zur Herstellung einer anisotropen Schicht vernetzter flüssigkristalliner Monomere (LCP) in Kontakt mit einer ersten Orientierungsschicht auf einem einzelnen Substrat, wobei auf dem Substrat die erste Orientierungsschicht und auf dieser eine Schicht aus einem nicht vernetzten, flüssigkristallinen Monomer aufgebracht wird, und anschliessend das Monomer in Kontakt mit nur dieser ersten Orientierungsschicht vernetzt wird; **dadurch gekennzeichnet, dass** nach der Vernetzung auf die LCP-Schicht eine zweite Orientierungsschicht aufgebracht wird.

2. Verfahren nach Anspruch 1, **dadurch gekennzeichnet, dass** für mindestens eine der zwei Orientierüngsschichten ein photoorientiertes Polymer netzwerk (PPN) verwendet wird.

3. Verfahren nach Anspruch 1 oder 2, **dadurch gekennzeichnet, dass** auf die zweite Orientierungsschicht eine weitere Schicht aus einem nichtvernetzten flüssigkristallinen Monomer aufgebracht wird und dass anschliessend dieses Monomer vernetzt wird.

4. Optisches Bauelement mit einer Schichtstruktur auf einem einzelnen Substrat, wobei die Schichtstruktur aus einer Orientierungsschicht, einer darüber liegenden Schicht vernetzter flüssigkristalliner Monomere (LCP) und mindestens einer weiteren über der LCP-Schicht angeordneten Orientierungsschicht besteht, **dadurch gekennzeichnet, dass** mindestens eine der Orientierungsschichten aus einem photoorientierten Polymer netzwerk (PPN) besteht.

5. Optisches Bauelement nach Ansprüche 4, **dadurch gekennzeichnet, dass** mindestens eine der Orientierungsschichten ein lokal variierendes Orientierungsmuster aufweist.

6. Optisches Bauelement nach einem der Ansprüche 4 oder 5, **dadurch gekennzeichnet, dass** über der weiteren Orientierungsschicht eine weitere anisotrope Schicht orientiert vernetzter, flüssigkristalliner Monomere angeordnet ist.

7. Optisches Bauelement nach Anspruch 6, **dadurch gekennzeichnet, dass** die zweite vernetzte flüssigkristalline Monomerschicht als Orientierungsschicht ausgebildet ist.

8. Optisches Bauelement nach einem der Ansprüche 4-7, **dadurch gekennzeichnet, dass** mindestens eine der Orientierungsschichten eine durch Reiben oder Schrägbedampfung erzeugte Orientierungsstruktur auf ihrer Oberfläche besitzt.

9. Optisches Bauelement nach einem der Ansprüche 4-8, **gekennzeichnet durch** eine isotrope Entkopplungsschicht zwischen der weiteren Orientierungsschicht und der darunterliegenden LCP-Schicht.

10. Optisches Bauelement nach einem der Ansprüche 4-9, **dadurch gekennzeichnet, dass** die Orientierungs- und/oder die vernetzten flüssigkristallinen Monomerschichten das Substrat nur teilweise bedecken.

11. Optisches Bauelement nach einem der Ansprüche 4-10, **dadurch gekennzeichnet, dass** die erste vernetzte flüssigkristalline Monomerschicht als optischer Retarder ausgebildet ist.

12. Optisches Bauelement nach Anspruch 11, **dadurch gekennzeichnet, dass** mehrere flüssigkristalline Monomerschichten als optische Retarder ausgebildet sind.

13. Optisches Bauelement nach Anspruch 11, **dadurch gekennzeichnet, dass** die erste vernetzte flüssigkristalline Monomerschicht als verdrillter optischer Retarder ausgebildet ist, indem die LCP-Schicht aus einem cholesterischen Flüssigkristallmateria1 besteht.

14. Optisches Bauelement nach einem der Ansprüche 4-13, **dadurch gekennzeichnet, dass** eine oder mehrere der LCP-Schichten aus einem hoch verdrillten cholesterischen flüssigkristallinen Material bestehen und zwar derart, dass sie als optische Filter bzw. Zirkularpolarisatoren in bestimmten Lichtwellenlängenbereichen wirken.

15. Optisches Bauelement nach einem der Ansprüche 4-14, **dadurch gekennzeichnet, dass** absorptive Farbfilterschichten enthalten sind.

16. Optisches Bauelement nach einem der Ansprüche 4-15, **dadurch gekennzeichnet, dass** eine LCP-Schicht ferroelektrisch ist.

17. Optisches Bauelement nach einem der Ansprüche 4-16, **dadurch gekennzeichnet, dass** eine LCP-Schicht nichtlinear optisch aktiv ist.

18. Optisches Bauelement nach einem der Ansprüche 4-17, **dadurch gekennzeichnet, dass** eine oder mehrere LCP-Schichten dichroitische Farbstoffmoleküle enthalten und dadurch als absorptive optische Filter und/oder als Linearpolarisatoren wirken.

19. Optisches Bauelement nach einem der Ansprüche 4 - 18, **dadurch gekennzeichnet, dass** mindestens eine LCP-Schicht aus einem vernetzten Monomer oder einer Monomermischung besteht, die im monomeren Zustand zwischen 15°C und 80°C mindestens während der Verarbeitungsdauer der Monomerschicht flüssigkristallin ist.

20. Optisches Bauelement nach Anspruch 19, **gekennzeichnet durch** einen Temperaturbereich von 15°C bis 50°C.

21. Optisches Bauelement nach einem der Ansprüche 6 - 20, **gekennzeichnet durch** zwei LCP-Schichten, von denen die eine als Retarder und die andere als Orientierungsschicht ausgebildet ist.

22. Verwendung eines optischen Bauelements nach einem der Ansprüche 4-21 in transmittiven und reflektiven Flüssigkristallanzeigen.

23. Verwendung eines optischen Bauelements gemäss Anspruch 22, wobei die Flüssigkristallanzeige eine Drehzelle ist.

24. Verwendung eines optischen Bauelements gemäss Anspruch 23, wobei die Flüssigkristallanzeige eine STN-Zelle ist.

25. Verwendung eines optischen Bauelements gemäss Anspruch 22, wobei die Flüssigkristallanzeige eine ferro-elektrische Zelle ist.

26. Verwendung eines optischen Bauelements nach Anspruch 22, wobei die Flüssigkristallanzeige ein aktiv Matrix adressierbares Substrat enthält.

27. Verwendung eines optischen Bauelements nach einem der Ansprüche 4-21 in optischen und integrierten optischen Vorrichtungen.

28. Verwendung eines optischen Bauelements nach einem der Ansprüche 4-21 zur Fälschungs- und Kopiersicherung in Transmission.

## Claims

1. A method for the manufacture of an anisotropic layer of cross-linked liquid crystalline monomers (LCP) in contact with a first orientating layer on a single substrate, **characterized in that** the method comprises applying to the single substrate the first orientating layer and on this applying a layer of a non-cross linked liquid crystalline monomer and subsequently cross-linking the monomer being in contact with only the first orientating layer, and applying a second orientating layer to the LCP layer subsequently to the cross-linking of the LCP layer.

2. A process according to claim 1, wherein at least for one of the two orientating layers a photo-orientated polymer network (PPN) is used.

3. A process according to claim 1 or 2, wherein a further layer of a non-cross linked liquid crystalline monomer is applied to the second orientating layer and the monomer is subsequently cross-linked.

4. An optical component having a layer structure comprising an orientating layer, a layer of cross-linked liquid crystalline monomers (LCP) above the orientating layer and at least one additional orientating layer above the LCP layer on a single substrate, **characterized in that** at least one of the orientating layers consists of a photo-orientated polymer network (PPN).

5. An optical component according to claim 4, wherein at least one of the orientating layers has a locally varying orientation pattern.

6. An optical component according to claim 4 or 5, wherein an additional anisotropic layer of oriented cross-linked liquid crystal monomers is arranged above the additional orientation layer.

7. An optical component according to claim 6, wherein the second layer of cross-linked liquid crystal monomers is an orientation layer.

8. An optical component according to any one of claims 4 to 7, wherein at least one of the orientation layers has a surface orientation structure produced by rubbing or oblique sputtering.

9. An optical component according to any one of claims 4 to 8, wherein an isotropic de-coupling layer is provided between the lower LCP-layer and the additional orientation layer.

10. An optical component according to any one of claims 4 to 9, wherein the orientation and/or the cross-linked liquid crystal monomer layers cover only part of the substrate.

11. An optical component according to any one of claims 4 to 10, wherein the first cross-linked liquid crystal monomer layer is an optical retarder.

12. An optical component according to claim 11, wherein a number of liquid crystal monomer layers are constructed as optical retarders.

13. An optical component according to claim 11, **characterised in that** the first cross-linked liquid crystal monomer layer is constructed as a twisted optical retarder, the LCP layer consisting of a cholesteric liquid crystal material.

14. An optical component according to any one of claims 4 or 13, wherein one or more of the LCP layers consist of a highly twisted cholesteric liquid crystal material so as to act as optical filters or circular polarisers in certain light wavelength ranges.

15. An optical component according to any one of claims 4 or 14, wherein absorptive colour filter layers are present.

16. An optical component according to any one of claims 4 or 15, wherein one LCP layer is ferroelectric.

17. An optical component according to any one of claims 4 or 16, wherein one LCP layer has non-linear optical activity.

18. An optical component according to any one of claims 4 or 17, wherein one or more LCP layers contain dichroic dye molecules, so as to act as absorptive optical filters and/or as linear polarisers.

19. An optical component according to any one of claims 4 or 18, wherein at least one LCP layer consists of a cross-linked monomer or a monomer mixture which in the monomeric state is liquid crystalline between 15°C and 80°C, at least during the processing period.

20. An optical component according to claim 19, wherein the temperature range is from 15°C to 50°C.

21. Use of an optical component according to any one of claims 6 to 20, **characterized by** two LCP layers, wherein one LCP layer acts as a retarder and the other acts as an orientation layer.

22. Use of an optical component according to any one of claims 4 to 21 in transmittive and reflective liquid crystal displays.

23. Use of an optical component according to claim 22, wherein the liquid crystal display is a rotation cell.

24. Use of an optical component according to claim 23, wherein the liquid crystal display is a STN cell.

25. Use of an optical component according to claim 22, wherein the liquid crystal display is a ferroelectric cell.

26. Use of an optical component according to claim 22, wherein the liquid crystal cell contains an active matrix substrate which is addressable.

27. Use of an optical component according to any one of claims 4 to 21 in optical and integrated optical devices.

28. Use of an optical component according to any one of claims 4 to 21 for safeguarding against counterfeiting and copying in transmission.

## Revendications

1. Un procédé de fabrication d'une couche anisotrope de monomères liquides cristallins réticulés (LCP selon les initiales du terme anglo-saxon Liquid cristal polymer) au contact d'une première couche d'orientation sur un substrat individuel, **caractérisé en ce que** la première couche d'orientation est déposée sur le substrat et qu'une couche d'un monomère liquide cristallin non réticule est déposé sur cette couche, **en ce que** le monomère est ensuite réticulé au contact seulement de cette première couche d'orientation et **en ce qu'**une deuxième couche d'orientation est déposée après la réticulation sur la couche de LCP.

2. PrOcédé selon la revendication 1, **caractérisé en ce qu'**un réseau polymère photo-orienté (PPN selon les initiales du terme anglo-saxon Photoriented polymer network) est utilisé pour au moins l'une des deux couches d'orientation.

3. Procédé selon la revendication 1 ou 2, **caractérisé en ce qu'**une autre couche d'un monomère liquide cristallin non réticule est déposée sur la deuxième couche d'orientation et **en ce que** ce monomère est ensuite réticulé.

4. Composant optique à structure de couches sur un substrat individuel, dans lequel la structure de couches se compose d'une couche d'orientation, d'une couche de monomères liquides cristallins réticulés (LCP) qui lui est superposée et d'au moins une couche d'orientation additionnelle superposée à la couche de LCP, **caractérisé en ce que** au moins l'une des couches d'orientation se compose d'un réseau polymère photo-orienté (PPN).

5. Composant optique selon la revendication 4, **caractérisé en ce qu'**au moins l'une des couches d'orientation comporte une configuration d'orientation qui varie localement.

6. Composant optique selon la revendication 4 ou 5, **caractérisé en ce qu'**une couche anisotrope additionnelle de monomères liquides cristallins réticulés de façon orientée est superposée à la couche additionnelle d'orientation.

7. Composant optique selon la revendication 6, **caractérisé en ce que** la deuxième couche de monomères liquides cristallins réticulés consiste en une couche d'orientation.

8. Composant optique selon l'une quelconque des revendications 4 à 7, **caractérisé en ce qu'**au moins l'une des couches d'orientation possède sur sa surface une structure d'orientation engendrée par friction ou par dépôt oblique en phase vapeur.

9. Composant optique selon l'une quelconque des revendications 4 à 8, **caractérisé par** une couche isotrope de découplage entre la couche additionnelle d'orientation et la couche sous-jacente de LCP.

10. Composant optique selon l'une quelconque des revendications 4 à 9, **caractérisé en ce que** les couches d'orientation et/ou les couches de monomères liquides cristallins réticulés ne recouvrent que partiellement le substrat.

11. Composant optique selon l'une quelconque des revendications 4 à 10, **caractérisé en ce que** la première couche de monomères liquides cristallins réticulés constitue un retardateur optique.

12. Composant optique selon la revendication 11, **caractérise en ce que** plusieurs couches de monomères liquides cristallins constituent des retardateurs optiques.

13. Composant optique selon la revendication 11, **caractérisé en ce que** la première couche de monomères liquides cristallins réticulés constitue un retardateur optique torsadé, et dans lequel la couche de LCP se compose d'une matière liquide cristalline cholestérique.

14. Composant optique selon l'une quelconque des revendications 4 à 13, **caractérisé en ce qu'**une ou plusieurs couches de LCP se composent d'une matière liquide cristalline cholestérique hautement torsadée d'une manière telle qu'elles interviennent comme filtres optiques ou comme polariseurs circulaires dans des domaines déterminés de longueurs d'ondes.

15. Composant optique selon l'une quelconque des revendications 4 à 14, **caractérisé en ce que** des couches absorbantes de filtres de couleurs y sont contenues.

16. Composant optique selon l'une quelconque des revendications 4 à 15, **caractérisé en ce qu'**une couche de LCP est ferroélectrique.

17. Composant optique selon l'une quelconque des revendications 4 à 16, **caractérisé en ce que** l'activité optique de l'une des couches de LCP est non linéaire.

18. Composant optique selon l'une quelconque des revendications 4 à 17, **caractérisé en ce qu'**une ou plusieurs couches de LCP contiennent des molécules de colorants dichroïques et interviennent donc comme filtres optiques absorbants et/ou comme polariseurs linéaires.

19. Composant optique selon l'une quelconque des revendications 4 à 18, **caractérisé en ce qu'**au moins l'une des couches de LCP se compose d'un monomère réticule ou d'un mélange de monomères liquides cristallins à l'état monomère entre 15°C et 80°C au moins pendant la durée du traitement de la couche de monomère.

20. Composant optique selon la revendication 19, **caractérisé par** une plage de températures de 15°C à 50°C.

21. Composant optique selon l'une quelconque des revendications 6 à 20, **caractérisé par** deux couches de LCP, dont l'une constitue un retardateur et l'autre constitue une couche d'orientation.

22. Utilisation d'un composant optique selon l'une quelconque des revendications 4 à 21 dans des affichages à cristaux liquides transmissifs et réflectifs.

23. Utilisation d'un composant optique selon la revendication 22, dans lequel l'affichage à cristaux liquides est une cellule de rotation.

24. Utilisation d'un composant optique selon la revendication 22, dans lequel l'affichage à cristaux liquides est une cellule nématique super torsadée ou cellule STN selon les initiales du terme anglo-saxon Super twisted nematic.

25. Utilisation d'un composant optique selon la revendication 22, dans lequel l'affichage à cristaux liquides est une cellule ferroélectrique.

26. Utilisation d'un composant optique selon la revendication 22, dans lequel l'affichage à cristaux liquides contient un substrat adressable à matrice active.

27. Utilisation d'un composant optique selon l'une des revendications 4 à 21 dans des dispositifs optiques et optiques intégrés.

28. Utilisation d'un composant optique selon l'une des revendications 4 à 21 pour la sécurité contre la fraude et la copie en transmission.
